(19)

**Europäisches Patentamt**
**European Patent Office**
**Office européen des brevets**

(11) **EP 2 625 779 B1**

(12) **EUROPEAN PATENT SPECIFICATION**

(45) Date of publication and mention
of the grant of the patent:
**02.10.2019 Bulletin 2019/40**

(51) Int Cl.:
**H02P 7/06** *(2006.01)*　　　**H02P 25/18** *(2006.01)*

(21) Application number: **11831449.1**

(86) International application number:
**PCT/US2011/054766**

(22) Date of filing: **04.10.2011**

(87) International publication number:
**WO 2012/047886 (12.04.2012 Gazette 2012/15)**

(54) **ELECTRIC MOTOR HAVING WINDINGS OPERABLE IN PARALLEL AND/OR SERIES, AND RELATED METHODS**

ELEKTROMOTOR MIT PARALLEL ODER SERIELL BETREIBBAREN WICKLUNGEN UND ZUGEHÖRIGES VERFAHREN

MOTEUR ÉLECTRIQUE AYANT DES BOBINAGES POUVANT FONCTIONNER EN PARALLÈLE ET/OU EN SÉRIE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2010 US 389528 P**

(43) Date of publication of application:
**14.08.2013 Bulletin 2013/33**

(73) Proprietor: **Sunluxe Enterprises Limited Hong Kong (CN)**

(72) Inventors:
• **KRIEGER, Michael Miami Florida 33139 (US)**

• **SHUM, Henry Hong Kong (CN)**

(74) Representative: **Stork Bamberger Patentanwälte PartmbB Meiendorfer Strasse 89 22145 Hamburg (DE)**

(56) References cited:
**US-A- 5 793 178**　　　**US-A- 5 823 280**
**US-A1- 2001 008 859**　　**US-A1- 2005 224 264**
**US-A1- 2006 043 916**　　**US-A1- 2006 197 396**
**US-A1- 2009 033 159**　　**US-B1- 6 203 468**
**US-B1- 6 300 739**

## Description

### TECHNICAL FIELD

This patent application relates generally to electric motors, for example, for use in motorized vehicles such as electric bicycles, electric automobiles, and other vehicles. More specifically, this patent application relates to electric motors having windings operable in parallel and/or series.

### BACKGROUND OF THE INVENTION

It is known in the art for vehicles to use one or more electromagnetic motors to power the wheels. For example, electric bicycles may have a centrally-located motor that drives the front wheel and/or the rear wheel through a transmission. Alternatively, electric bicycles may have a motor located on the front hub and/or a motor located on the rear hub.

Due to the speed vs. torque characteristics for conventional electromagnetic motors, known motors are typically efficient when operating at either high torque (e.g., for accelerating the bicycle or going uphill) or when operating at high speed (e.g., when the bicycle is cruising on flat roads), but not both. This can lead to undesirable performance of the bicycle, and/or decreased battery life.

US 2006/0043916 A1 relates to a variable speed electric motor to drive a variable load over a substantially continuous range of speed.

### SUMMARY OF THE INVENTION

According to an embodiment of the present invention, an electric motor for propelling a vehicle comprises a stator; a rotor that rotates with respect to the stator; a magnet located on the stator or the rotor; a first winding segment and a second winding segment located on the other of the stator or the rotor; and a controller adapted to operate the first winding segment and the second winding segment in series or in parallel as a function of at least the motor current.

According to another embodiment, the present invention is directed to a method of controlling an electric motor for propelling a vehicle, the electric motor having a rotor and a stator, and a first winding segment and a second winding segment located on the rotor or the stator. The method comprises operating the electric motor upon startup with the first winding segment and the second winding segment connected in series; monitoring motor current; and upon detecting a predetermined decrease in the motor current, switching the connection of the first winding segment and the second winding segment to parallel.

According to yet another embodiment, the present invention is directed to a method of controlling an electric motor for propelling a vehicle, the electric motor having a rotor and a stator, and a first winding segment and a second winding segment located on the rotor or the stator. The method comprises determining a torque load applied to the electric motor due to operating conditions of the vehicle; operating the motor with the first winding segment and the second winding segment in series when the torque load is above a predetermined level; and operating the motor with the first winding segment and the second winding segment in parallel when the torque load is below a predetermined level. The present invention is defined in the independent claims.

### BRIEF DESCRIPTION OF THE DRAWINGS

The foregoing aspects and other features and advantages of the invention will be apparent from the following drawings, wherein like reference numbers generally indicate identical, functionally similar, and/or structurally similar elements.

FIG. 1 is an illustrative perspective view of an electric bicycle according to an embodiment of the present invention;

FIG. 2 is an illustrative perspective view of an electric bicycle according to another embodiment of the present invention;

FIG. 3A depicts an electric motor according to an embodiment of the present invention;

FIG. 3B depicts an electric motor according to another embodiment of the present invention;

FIG. 4 is a schematic depiction of the first and second winding segments in a three-phase DC motor configuration according to an embodiment of the present invention;

FIG. 5 is a circuit diagram for an electric motor according to an embodiment of the present invention;

FIGS. 6A and 6B are simplified circuit diagrams showing the first winding segment and second winding segment of FIG. 5 operating in parallel and series, respectively;

FIG. 7 is a circuit diagram for an electric motor and driver circuit according to an embodiment of the present invention; and

FIGS. 8A and 8B are simplified circuit diagrams showing the first winding segment and second winding segment of FIG. 7 operating in series and parallel, respectively.

### DETAILED DESCRIPTION

Embodiments of the invention are discussed in detail below. In describing embodiments, specific terminology is employed for the sake of clarity. However, the invention is not intended to be limited to the specific terminology so selected. A person skilled in the relevant art will recognize that other equivalent parts can be employed and other methods developed without departing from the spirit and scope of the invention.

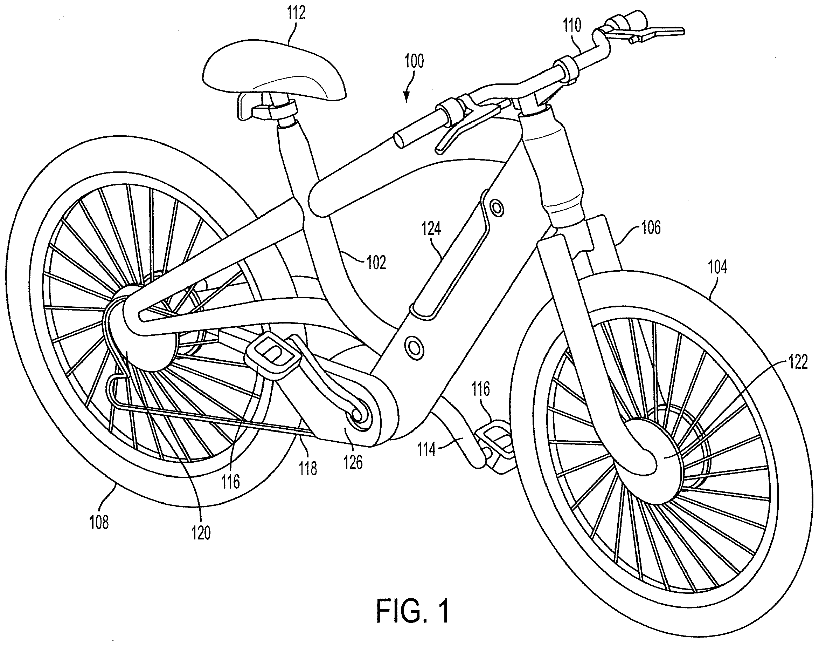

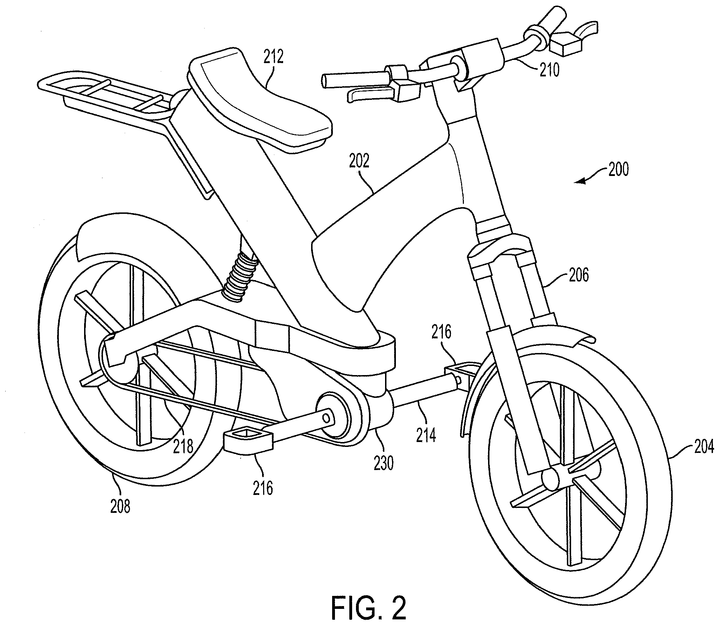

Referring to FIGS. 1 and 2, illustrative embodiments of a motorized vehicle according to the present invention are shown. The motorized vehicle can comprise an electric bicycle, scooter, moped, or other type of vehicle driven by human and/or motorized propulsion. The present invention is not limited to two-wheeled vehicles, however, but also relates to vehicles having three, four, or more wheels, such as golf carts and automobiles. For the sake of simplicity, and without limiting the scope of the present invention, the motorized vehicle will be described in connection with an electric bicycle.

As shown in FIG. 1, the bicycle 100 can generally include a frame 102, a front wheel 104 supported by the frame 102, for example, using a front fork 106, and a rear wheel 108 supported by the frame 102. The bicycle 100 can further include handlebars 110 coupled to the front wheel 104, for example, through the front fork 106, to provide steering of the front wheel 104. Additionally, the bicycle 100 can include a seat 112 to support the rider.

Still referring to FIG. 1, the bicycle 100 can also include a crank 114 with pedals 116, which can be turned by the rider to rotate the rear wheel 108, for example, through a belt 118, chain, or other power transmission device. In addition, the bicycle 100 can include an electric motor 120 located in the hub of the rear wheel 108, and/or an electric motor 122 located in the hub of the front wheel 104. A transmission (not shown), such as a planetary gearbox, can be located in each hub to couple the electric motor 120 and/or 122 to the respective wheel 104 and/or 108. The transmission(s) can be multi-speed transmission(s) having multiple different gear ratios, for example, first gear, second gear, third gear, etc. The gear ratios can be manually selected by the vehicle operator, or else automatically selected by a control system. The bicycle 100 can further include a power source, such as a battery 124, and a controller 126, that delivers electric power from the battery 124 to the electric motor 120 and/or electric motor 122. According to an embodiment, the front and/or rear motors 122, 120 can comprise brushless DC motors, however, other types of motors are possible.

Referring to FIG. 2, an alternative embodiment of a bicycle according to the present invention is shown. According to this embodiment, the bicycle 200 can generally include a frame 202, a front wheel 204 supported by the frame 202, for example, using a front fork 206, and a rear wheel 208 supported by the frame 202. The bicycle 200 can further include handlebars 210 coupled to the front wheel 204, for example, through the front fork 206, to provide steering of the front wheel 204. Additionally, the bicycle 200 can include a seat 212 to support the rider.

Still referring to FIG. 2, the bicycle 200 can also include a crank 214 with pedals 216, which can be turned by the rider to rotate the rear wheel 208, for example, through a belt 218, chain, or other power transmission device. In addition, the bicycle 200 can include an electric motor (hidden from view) mid-mounted on the frame 202, for example, in a transmission 230. The transmission 230 can distribute power from the electric motor and the crank 214 to the rear wheel 208, for example, through the belt 218, chain, or other power transmission device. The transmission 230 can be a multi-speed transmission having multiple different gear ratios, for example, first gear, second gear, third gear, etc. The gear ratios can be manually selected by the vehicle operator, or else automatically selected by a control system. The bicycle 200 can further include a controller and a battery (both hidden from view) that provide power to the motor, in order to drive the rear wheel 208.

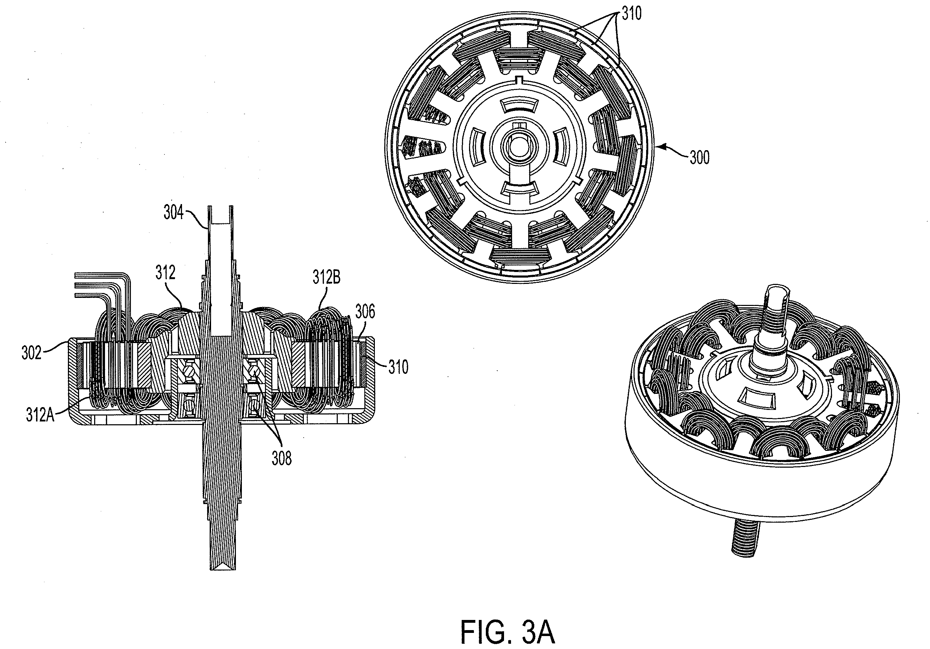

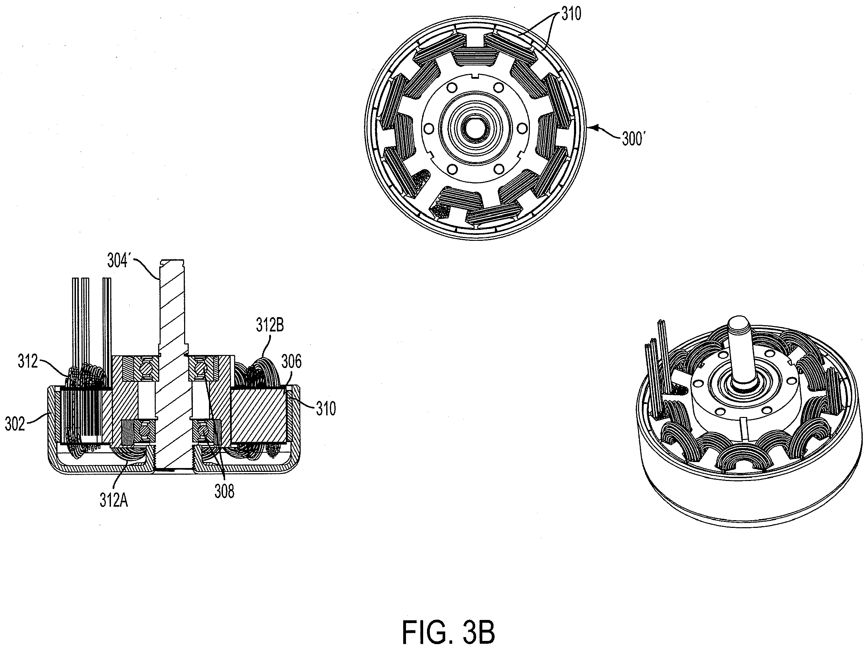

Referring to FIGS. 3A and 3B, embodiments of an electric motor 300, 300' according to the present invention are shown. The electric motor 300, 300' may be a brushed DC motor, a brushless DC motor, or another type of motor known in the art. The electric motor 300, 300' can include two or more discrete winding segments, discussed in more detail below, which can operate in series or parallel, depending on the operating conditions of the vehicle, e.g., bicycle 100 or 200. For example, the winding segments can operate in series to provide high torque output from the electric motor 300, 300', for example, when the vehicle is accelerating, driving uphill, or facing a headwind. On the other hand, the winding segments can operate in parallel to provide high speed and efficiency from the electric motor 300, 300', for example, when the vehicle is cruising along on level ground. The ability of the electric motor 300, 300' to switch the winding segments between series and parallel allows the motor to provide both high torque and high efficiency.

Referring to the embodiment of FIG. 3A, the electric motor 300 can generally include a rotor 302 connected to an output shaft 304, and a stator 306 that is mounted to the shaft 304, for example, using one or more bearings 308. As a result, the rotor 302 and output shaft 304 can rotate as a unit with respect to the stator 306. As shown, the rotor 302 can include a plurality of magnets 310 distributed around its periphery, such as permanent magnets or wound electromagnets, and the stator 306 can include a winding 312 located opposite the magnets 310. In the embodiment of FIG. 3A, the output shaft 304 extends from both sides of the electric motor 300, such that it comprises two coaxial output shafts, however, other configurations are possible. The embodiment of FIG. 3A may be used, for example, in a mid-drive bicycle.

The winding 312 can include a first winding segment 312A and a second winding segment 312B, which are discreet from one another, e.g., have distinct positive and negative terminals. The first and second winding segments 312A, 312B can be intertwined with one another on the stator 306, or alternatively, one of the segments can be wound on top of, or beside, the other segment on the stator 306. Although two winding segments are shown in FIG. 3A, embodiments of the present invention may have more than two winding segments, for example, three or four. Further details regarding the winding 312 will be provided below.

The electric motor 300' shown in FIG. 3B is similar to that of FIG. 3A, except the shaft 304' extends from only one side of the motor 300'. In addition, the electric motor 300' shown in FIG. 3B has sixteen poles, whereas the motor 300 shown in FIG. 3A has twenty poles. Aside from these differences, the structure and operation of the electric motors 300, 300' are substantially the same for the purposes of the present invention.

One of ordinary skill in the art will understand that the present invention is not limited to the motor structures shown in FIGS. 3A and 3B, and that other configurations are possible. For example, in an alternative embodiment, the magnets 310 can be located on the stator 306, and the winding 312 can be located on the rotor 302, as would be understood by one of ordinary skill in the art.

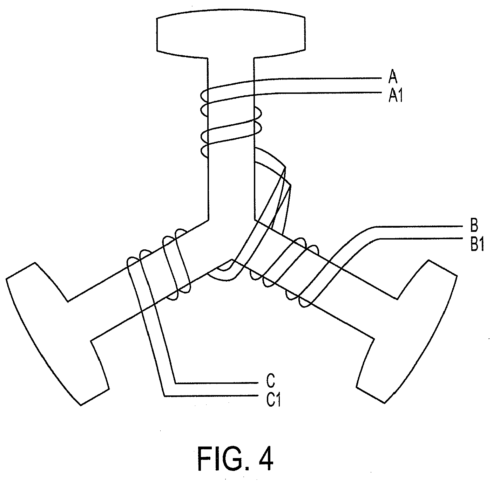

FIG. 4 is a schematic depiction of the first and second winding segments in a three-phase DC motor configuration according to an embodiment of the present invention. FIG. 4 depicts the first, second, and third phases of the first winding segment as A, B, and C, and depicts the first, second, and third phases of the second winding segment as A1, B1, and C1. The first, second, and third phases A, B, C of the first winding segment can be operated in series or parallel with the first, second, and third phases A1, B1, C1 of the second winding segment to alter the operating characteristics of the electric motor, as described in more detail below. Although the electric motor is shown in FIG. 4 as having three phases, other configurations having more or less than three phases are possible.

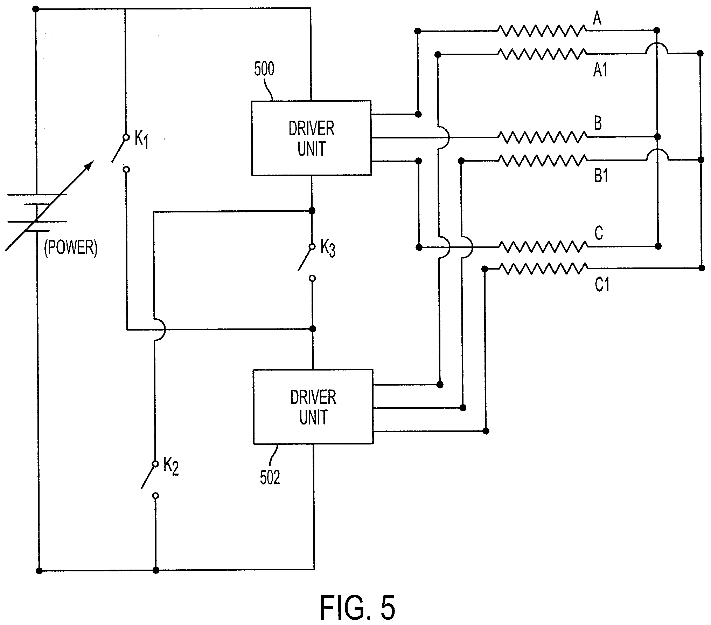

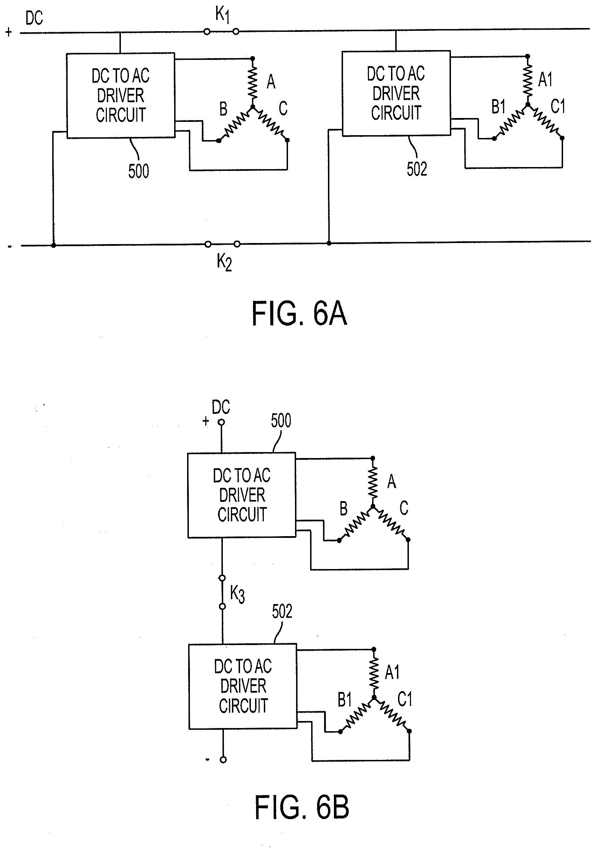

FIG. 5 is a circuit diagram for an electric motor 300, 300' according to an embodiment of the present invention. The electric motor can include a first driver unit or circuit 500 that drives the first winding segment A, B, C, and a second driver unit or circuit 502 that drives the second winding segment AI, B1, C1. The first driver unit 500 and the second driver unit 502 can be connected by a circuit, including switches $K_1$, $K_2$, and $K_3$. Depending on the position of the switches $K_1$, $K_2$, and $K_3$, the first driver unit 500 and second driver unit 502 can be operated in parallel or series. For example, when switches $K_1$ and $K_2$ are closed, and switch $K_3$ is open, the first driver unit 500 and the second driver unit 502 are connected in parallel, as shown in the simplified circuit diagram of FIG. 6A. As a result, the first winding segment A, B, C and the second winding segment A1, B1, C1 are powered in parallel.

Still referring to FIG. 5, when switches $K_1$ and $K_2$ are open, and switch $K_3$ is closed, the first and second driver units 500, 502 are connected in series, as shown in the simplified circuit diagram of 6B. As a result, the first winding segment A, B, C and the second winding segment A1, B1, C1 are powered in series. The switches $K_1$, $K_2$, and $K_3$ can comprise MOSFETs, transistors, relays, solenoids, relays, or other types of switches known in the art, and combinations thereof. A controller (not shown) can be used to switch the switches $K_1$, $K_2$, and $K_3$ between open and closed positions, as will be discussed in more detail below.

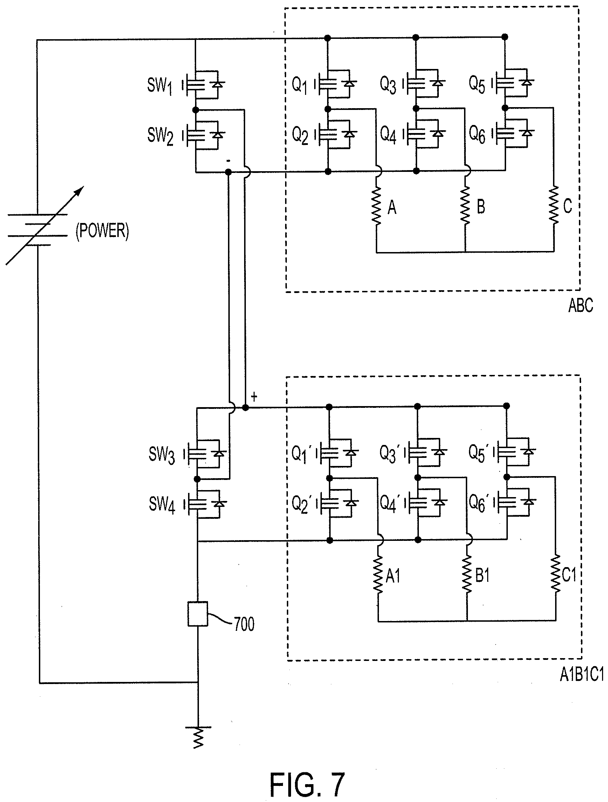

FIG. 7 depicts an exemplary embodiment where the first driver unit 500 comprises a plurality of MOSFETs $Q_1$ - $Q_6$, and the second driver unit 502 comprises a plurality of MOSFETs $Q_1'$ - $Q_6'$. The MOSFETs $Q_1$ - $Q_6$ and $Q_1'$ - $Q_6'$ can comprise chopper circuits, although other configurations are possible.

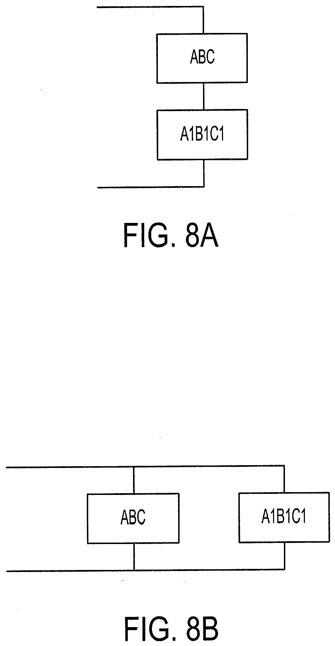

FIG. 7 also depicts the switches $K_1$, $K_2$, and $K_3$ as MOSFETs $SW_1$, $SW_2$, $SW_3$, $SW_4$. Depending on the open/closed position of the MOSFETs $SW_1$, $SW_2$, $SW_3$, and $SW_4$, the first winding segment A, B, C and the second winding segment A1, B1, C1 may operate in series (as shown in FIG. 8A) or parallel (as shown in FIG. 8B). For example, when switches $SW_1$ and $SW_4$ are closed, and switches $SW_2$ and $SW_3$ are open, the winding segments operate in parallel, and when switches $SW_1$, $SW_2$, and $SW_4$ are open, and $SW_3$ is closed, the winding segments operate in series. The embodiment of FIG. 3B may be used, for example, in a hub-drive bicycle.

Still referring to FIG. 7, exemplary operation of the first and second driver units 500, 502 will be described. As an example, when MOSFETs $Q_1$ and $Q_4$ are on, power is transmitted to winding phase A, then to winding phase B, and then to ground. When the first and second winding segments A, B, C and A1, B1, C1 are operating in series, the MOSFETs $Q_1'$ and $Q_4'$ will be turned on as well, so the power is transmitted to winding phase A, then to winding phase B, then to winding phase A1, then to winding phase B1, and then to ground. Winding phases C and C1 are floating at this time. A current sensor 700 can be included in the circuit to detect motor current.

After every sixty degrees of rotation of the stator, the phase changes, and the power turns on a different pair of MOSFETs $Q_1$ - $Q_6$ and $Q_1'$ - $Q_6'$. As a result, the power flows through different pairs of phase windings, e.g., A, C, A1, C1 to ground, or B, C, B1, C1 to ground. Sensors can be provided in the electric motor 300, 300' to detect the position of the rotor. For example, three hall-effect sensors can be equally distributed 120° from one another about the axis of the rotor. The hall effect sensors can also be used to sense the speed of the electric motor 300, 300', for example, by calculating the time it takes for a set point on the rotor to move from one sensor to an adjacent sensor. One of ordinary skill in the art will understand that other devices and configurations can be utilized to measure the speed of the electric motor 300, 300'.

As mentioned above, a controller (not shown) may be utilized to switch the first winding segment and the second winding segment between series and parallel operation depending, for example, on the load (e.g., torque) applied to the output shaft of the electric motor 300, 300'. The controller can comprise a microprocessor, a microchip, a computer, a programmable logic controller, or other type of control device known in the art.

The controller can be adapted to operate the first winding segment and the second winding segment in series or in parallel as a function of the motor current. For example, a sensor can continuously monitor the motor current, and provide this information to the controller. According to an embodiment, a logic circuit in the controller can be used to monitor the motor current. When the controller detects a predetermined amount of change in the motor current, such as an increase or decrease, the controller can trigger the switches $K_1$, $K_2$, $K_3$ shown in FIG. 5 to switch the windings A, B, C, and A1, B1, C1 between series and parallel operation to suit the operating conditions of the vehicle. Additionally or alternatively, the controller can be adapted to operate the first winding segment and the second winding segment in series or parallel as a function of the voltage of the electric motor's power supply (e.g., a battery) and/or as a function of the moving speed of the vehicle being propelled by the electric motor, and/or as a function of the gear in which the vehicle's transmission is operating. According to an embodiment, the controller can operate the first winding segment and the second winding segment in series or parallel based on both (i) the motor current and (ii) the vehicle speed x the power supply voltage x the selected gear ratio of the transmission.

An illustrative operation of an electric motor according to the present invention will now be described in connection with it's use in an electric bicycle. Referring to FIG. 5, upon startup, the controller will typically signal the first driver unit 500 and the second driver unit 502 to operate in series, resulting in the first winding segment A, B, C and the second winding segment A1, B1, C1, operating in series. This can provide, for example, increased torque output to accelerate the bike up to cruising speed.

The controller can monitor a number of variables, including, for example, the motor current, the bicycle's moving speed, the voltage of the bicycle's power supply (e.g., battery), and/or the gear ratio the transmission is operating in. These variables may be indicative of the torque load applied to the electric motor. As a result, the controller can operate the electric motor with the first winding segment A, B, C and the second winding segment A1, B1, C1 in series when the torque load is above a predetermined level, and can operate the segments in parallel when the torque load is below a predetermined level. Therefore, the electric motor may provide high torque output (series configuration) when the operating conditions of the bicycle require high torque, and provide high speed and high efficiency (parallel configuration) when the operating conditions of the bicycle require more speed and less torque.

According to an embodiment, the controller constantly monitors both the motor current and a formula that includes the moving speed, the power supply voltage, and the gear the transmission is in. According to the invention, the formula is moving speed x power supply voltage x selected gear ratio. While the electric motor is operating with the winding segments in series, if the controller detects that the motor current has dropped below a certain value (which can be a floating value or a fixed value), the controller will then check to see if the formula (e.g., speed x power supply voltage x selected gear ratio) has increased above a certain value (which can also be a floating value or a fixed value). If the controller detects that both of these events have happened, the controller can switch the first driver unit 500 and second driver unit 501 to parallel operation, causing the first winding segment A, B, C, and the second winding segment A1, B1, C1 to operate in parallel. In the embodiment of FIG. 5, this can occur, for example, by switches $K_1$ and $K_2$ being closed, and switch $K_3$ being open.

When the electric motor is operating with the first and second windings in parallel, for example, when the bicycle is cruising along on flat ground, the controller will continue to monitor the motor current and the aforementioned formula. If the bicycle encounters resistance (e.g., a hill, wind, or increased weight load), the controller will first determine whether there has been an increase in the speed x power supply voltage x selected gear ratio. If this formula has dropped below a certain level (which may be a floating value or a fixed value), the controller will then check whether the motor current has increased above a certain value (which may be a floating value or a fixed value). If the controller determines that both of these events have occurred, the controller will signal the first driver unit 500 and second driver unit 502 to operate in series, causing the first winding segment A, B, C, and the second winding segment A1, B1, C1 to operate in series. In the embodiment of FIG. 5, this can occur, for example, by switches $K_1$ and $K_2$ opening, and switch $K_3$ closing.

In the foregoing embodiment, switching the first and second winding segments from series to parallel is initially determined by a decrease in motor current, whereas switching the segments from parallel to series is initially determined by a decrease in the formula speed x power supply voltage x selected gear ratio, however, other embodiments are possible. Furthermore, other embodiments may make the switch between series and parallel operation, and vice versa, based solely on motor current, power supply voltage, vehicle speed, gear ratio, or other variables, and/or various combinations thereof.

As an example, the controller can be configured to switch the motor between series and parallel operation, and vice versa, based on the following formula:

$$X = (((k1 * V) + k2 - (k3 * I)) * k4) / A$$

where:

V = voltage of the power supply;
I = the current in the motor;
A is a gear ratio in the vehicle's transmission; and
k1, k2, k3, and k4 are constants.

The controller can use the value of X, above, in conjunction with the motor current and the vehicle speed to determine whether to operate the motor in parallel or series. For example, when the motor is operating in series, if the motor current drops below a certain value, for example, 10 amps, and the speed is above the calculated value "X," above, the controller can switch the motor to operate in parallel. Similarly, when the motor is operating in parallel, if the motor current exceeds a certain value, for example, 10 amps, and the speed is below the calculated value "X," above, the controller can switch the motor to operate in series. One of ordinary skill in the art will appreciate, however, that other formulas and considerations can be utilized to switch the motor between parallel and series operation, and vice versa.

**Claims**

1. An electric motor (300; 300') configured to propel a vehicle, the motor comprising:

   a stator (306);
   a rotor (302) that rotates with respect to the stator (306);
   a magnet (310) located on the stator (306) or the rotor (302);
   a first winding segment (312A) and a second winding segment (312B) located on the other of the stator (306) or the rotor (302);
   a controller (126) adapted to operate the first winding segment (312A) and the second winding segment (312B) in series or in parallel as a function of at least the motor current;
   a power supply (124) for the electric motor (300; 300'), wherein the controller (126) is further adapted to operate the first winding segment (312A) and the second winding segment (312B) in series or in parallel as a function of at least one of power supply voltage and vehicle speed;
   an output shaft (304; 304') connected to the rotor (302); and
   a transmission (230) coupled to the output shaft (304; 304'), the transmission (230) having a plurality of selectable gear ratios,
   **characterized in that** the controller (126) is further adapted to operate the first winding segment (312A) and the second winding segment (312B) in series or in parallel as a function of the selected gear ratio of the transmission (230), and
   wherein the controller (126) is adapted to operate the first winding segment (312A) and the second winding segment (312B) in series or in parallel as a function of (i) the motor current, and (ii) the vehicle speed x the power supply voltage x the selected gear ratio of the transmission (230).

2. The electric motor of claim 1, wherein the magnet (310) is permanent or wound.

3. The electric motor of claim 1, wherein the magnet (310) is located on the stator (306), and the first and second winding segments (312A, 312B) are located on the rotor (302).

4. The electric motor of claim 1, wherein the magnet (310) is located on the rotor (302), and the first and second winding segments (312A, 312B) are located on the stator (306).

5. The electric motor of claim 1, further comprising a first driver unit (500) that controls the first winding segment (312A), and a second driver unit (502) that controls the second winding segment (312B), wherein the controller (126) is adapted to connect the first driver unit (500) to the second driver unit (502) in series or in parallel.

6. The electric motor of claim 1, wherein the motor is a multi-phase DC motor.

7. An electric bicycle (100; 200), comprising the electric motor of claim 1.

8. The electric bicycle of claim 7, further comprising: pedals (116; 216) adapted to transmit power to at least one wheel of the bicycle.

9. A method of controlling an electric motor for propelling a vehicle having the electric motor of claim 1, the method comprising:

   operating the electric motor upon start-up with the first winding segment (312A) and the second winding segment (312B) connected in series;
   monitoring motor current; and
   upon detecting a predetermined decrease in the motor current, switching the connection of the first winding segment (312A) and the second winding segment (312B) to parallel,
   further operating the first winding segment (312A) and the second winding segment (312B) in series or in parallel as a function of at least one of power supply voltage and vehicle speed,
   **characterized by**
   further operating the first winding segment (312A) and the second winding segment (312B) in series or in parallel as a function of the selected gear ratio of the transmission (230), and
   further operating the first winding segment (312A) and the second winding segment (312B) in series or in parallel as a function of (i) the motor current, and (ii) the vehicle speed x the power supply voltage x the selected gear ratio of the transmission (230).

**10.** The method of claim 9, further comprising:

> monitoring vehicle speed, voltage of a power supply for the electric motor, and a gear ratio selected for a transmission coupled to the electric motor; and
> upon detecting the predetermined decrease in the motor current, switching the connection of the first winding segment (312A) and the second winding segment (312B) to parallel only if the vehicle speed x the power supply voltage x the selected gear ratio has increased by more than a predetermined amount.

**11.** The method of claim 9, wherein when the motor is operating with the first winding segment (312A) and the second winding segment (312B) connected in parallel, and upon detecting a predetermined increase in the motor current, switching the connection of the first winding segment (312A) and the second winding segment (312B) to series.

**Patentansprüche**

**1.** Elektromotor (300; 300') zum Antreiben eines Fahrzeugs, wobei der Motor umfasst:

> einen Stator (306);
> einen Rotor (302), der sich in Bezug auf den Stator (306) dreht;
> einen Magneten, der sich am Stator (306) oder am Rotor (302) befindet;
> ein erstes Wicklungssegment (312A) und ein zweites Wicklungssegment (312B), die am anderen Element von Stator (306) oder Rotor (302) angeordnet sind;
> eine Steuerung (126), die eingerichtet ist, um das erste Wicklungssegment (312A) und das zweite Wicklungssegment (312B) als Funktion mindestens des Motorstroms in Reihe oder parallel zu betreiben;
> eine Stromversorgung (124) für den Elektromotor (300; 300'), wobei die Steuerung (126) ferner eingerichtet ist, um das erste Wicklungssegment (312A) und das zweite Wicklungssegment (312B) als Funktion mindestens der Stromversorgungsspannung oder der Fahrzeuggeschwindigkeit in Reihe oder parallel zu betreiben;
> eine mit dem Rotor (302) verbundene Ausgangswelle (304; 304'); und
> ein mit der Ausgangswelle (304; 304') gekoppeltes Getriebe (230), wobei das Getriebe (230) mehrere wählbare Übersetzungsverhältnisse aufweist;
> **dadurch gekennzeichnet, dass**
> die Steuerung (126) weiterhin eingerichtet ist, um das erste Wicklungssegment (312A) und das zweite Wicklungssegment (312B) als Funktion des gewählten Übersetzungsverhältnisses des Getriebes in Reihe oder parallel zu betreiben, und
wobei die Steuerung (126) eingerichtet ist, das erste Wicklungssegment (312A) und das zweite Wicklungssegment (312B) als Funktion (i) des Motorstroms und (ii) der Fahrzeuggeschwindigkeit × der Stromversorgungsspannung × des gewählten Übersetzungsverhältnisses des Getriebes (230) in Reihe oder parallel zu betreiben.

**2.** Elektromotor nach Anspruch 1, wobei der Magnet (310) permanent oder gewickelt ist.

**3.** Elektromotor nach Anspruch 1, wobei der Magnet (310) am Stator (306) angeordnet ist und das erste und das zweite Wicklungssegment (312A, 312B) am Rotor (302) angeordnet sind.

**4.** Elektromotor nach Anspruch 1, wobei der Magnet (310) am Rotor (302) angeordnet ist und das erste und das zweite Wicklungssegment (312A, 312B) am Stator (306) angeordnet sind.

**5.** Elektromotor nach Anspruch 1, weiterhin umfassend eine erste Treibereinheit (500), die das erste Wicklungssegment (312A) steuert, und eine zweite Treibereinheit (502), die das zweite Wicklungssegment (312B) steuert, wobei die Steuerung (126) angepasst ist, um die erste Treibereinheit (500) in Reihe oder parallel mit der zweiten Treibereinheit (502) zu schalten.

**6.** Elektromotor nach Anspruch 1, wobei der Motor ein Mehrphasen-Gleichstrommotor ist.

**7.** Elektrofahrrad (100; 200), umfassend den Elektromotor nach Anspruch 1.

**8.** Elektrofahrrad nach Anspruch 7, weiterhin umfassend:
Pedale (116, 216), die angepasst sind, um Leistung an mindestens ein Rad des Fahrrads zu übertragen.

**9.** Verfahren zum Steuern eines Elektromotors zum Antreiben eines Fahrzeugs mit dem Elektromotor nach Anspruch 1, wobei das Verfahren umfasst:

> Betreiben des Elektromotors infolge des Startens, wobei das erste Wicklungssegment (312A) und das zweite Wicklungssegment (312B) in Reihe geschaltet sind;
> Überwachen des Motorstroms; und
> infolge des Erfassens einer vorbestimmten Abnahme des Motorstroms Parallelschalten der Verbindung des ersten Wicklungssegments (312A) und des zweiten Wicklungssegments (312B);

weiteres Betreiben des ersten Wicklungssegments (312A) und des zweiten Wicklungssegments (312B) als Funktion mindestens entweder der Stromversorgungsspannung oder der Fahrzeuggeschwindigkeit in Reihe oder parallel, **gekennzeichnet durch**

weiteres Betreiben des ersten Wicklungssegments (312A) und des zweiten Wicklungssegments (312B) als Funktion des gewählten Übersetzungsverhältnisses des Getriebes (230) in Reihe oder parallel, und

weiteres Betreiben des ersten Wicklungssegments (312A) und des zweiten Wicklungssegments (312B) als Funktion (i) des Motorstroms und (ii) der Fahrzeuggeschwindigkeit × der Stromversorgungsspannung × des ausgewählten Übersetzungsverhältnisses des Getriebes (230) in Reihe oder parallel.

10. Verfahren nach Anspruch 9, weiterhin umfassend:
Überwachen der Fahrzeuggeschwindigkeit, der Spannung einer Stromversorgung für den Elektromotor und eines Übersetzungsverhältnisses, das für ein mit dem Elektromotor gekoppeltes Getriebe gewählt ist; und infolge des Erfassens der vorbestimmten Abnahme des Motorstroms Parallelschalten der Verbindung des ersten Wicklungssegments (312A) und des zweiten Wicklungssegments (312B) nur dann, wenn die Fahrzeuggeschwindigkeit × die Stromversorgungsspannung × das gewählte Übersetzungsverhältnis um mehr als einen vorbestimmten Betrag angestiegen ist.

11. Verfahren nach Anspruch 9, wobei, wenn der Motor mit dem ersten Wicklungssegment (312A) und dem zweiten Wicklungssegment (312B) parallel geschaltet arbeitet und infolge des Erfassens eines vorbestimmten Anstiegs des Motorstroms, Schalten der Verbindung des ersten Wicklungssegments (312A) und des zweiten Wicklungssegments (312B) in Reihe.

**Revendications**

1. Moteur électrique (300; 300') conçu pour propulser un véhicule, ce moteur comprenant :

un stator (306) ;
un rotor (302) qui tourne par rapport au stator (306) ;
un aimant (310) disposé soit sur le stator (306) soit sur le rotor (302) ;
un premier segment d'enroulement (312A) et un deuxième segment d'enroulement (312B) disposés sur le pendant, du stator (306) ou du rotor (302) ; un régulateur (126), apte à faire marcher le premier segment d'enroulement (312A) et le deuxième segment d'enroulement (312B) en série ou en parallèle en fonction au moins du courant moteur ;
une alimentation électrique (124) pour le moteur électrique (300; 300'), le régulateur (126) étant en outre apte à faire marcher le premier segment d'enroulement (312A) et le deuxième segment d'enroulement (312B) en série ou en parallèle en fonction d'au moins soit la tension d'alimentation électrique, soit la vitesse de véhicule ;
un arbre de sortie (304; 304') raccordé au rotor (302) ; et
une transmission (230) couplée à l'arbre de sortie (304; 304'), la transmission (230) ayant une pluralité de rapports de démultiplication à sélectionner,
**caractérisé en ce que** le régulateur (126) est en outre apte à faire fonctionner le premier segment d'enroulement (312A) et le deuxième segment d'enroulement (312B) en série ou en parallèle en fonction du rapport de démultiplication sélectionné de la transmission (230), et
le régulateur (126) étant apte à faire marcher le premier segment d'enroulement (312A) et le deuxième segment d'enroulement (312B) en série ou en parallèle en fonction (i) du courant moteur, et (ii) de la vitesse de véhicule x la tension d'alimentation électrique x le rapport de démultiplication sélectionné de la transmission (230).

2. Moteur électrique selon la revendication 1, l'aimant (310) étant permanent ou enroulé.

3. Moteur électrique selon la revendication 1, l'aimant (310) étant disposé sur le stator (306), et les premier et deuxième segments d'enroulement (312A; 312B) étant disposés sur le rotor (302).

4. Moteur électrique selon la revendication 1, l'aimant (310) étant disposé sur le rotor (302), et les premier et deuxième segments d'enroulement (312A; 312B) étant disposés sur le stator (306).

5. Moteur électrique selon la revendication 1, comprenant en outre une première unité de pilotage (500) qui commande le premier segment d'enroulement (312A), et une deuxième unité de pilotage (502) qui commande le deuxième segment d'enroulement (312B), le régulateur (126) étant apte à raccorder en série ou en parallèle la première unité de pilotage (500) à la deuxième unité de pilotage (502).

6. Moteur électrique selon la revendication 1, le moteur étant un moteur multi-phasé à courant continu.

**7.** Vélo électrique (100; 200) comprenant le moteur électrique selon la revendication 1.

**8.** Vélo électrique selon la revendication 7, comprenant en outre :
des pédales (116; 216) aptes à transmettre du courant à au moins une roue du vélo.

**9.** Procédé de commande d'un moteur électrique destiné à propulser un véhicule muni du moteur électrique selon la revendication 1, ce procédé comprenant :

marche du moteur électrique après le démarrage, avec le premier segment d'enroulement (312A) et le deuxième segment d'enroulement (312B) qui sont raccordés en série ;
contrôle du courant moteur ; et
sur détection d'une baisse prédéterminée du courant moteur, commutation en parallèle du raccordement entre le premier segment d'enroulement (312A) et le deuxième segment d'enroulement (312B),
en outre, marche du premier segment d'enroulement (312A) et du deuxième segment d'enroulement (312B) en série ou en parallèle en fonction au moins soit de la tension en alimentation électrique soit de la vitesse du véhicule, **caractérisé par**
en outre, marche du premier segment d'enroulement (312A) et du deuxième segment d'enroulement (312B) en série ou en parallèle en fonction du rapport de démultiplication sélectionné de la transmission (230), et
en outre marche du premier segment d'enroulement (312A) et du deuxième segment d'enroulement (312B) en série ou en parallèle en fonction (i) du courant moteur, et (ii) de la vitesse du véhicule x la tension d'alimentation électrique x le rapport de démultiplication sélectionné de la transmission (230).

**10.** Procédé selon la revendication 9, comprenant en outre :

le contrôle de la vitesse du véhicule, de la tension d'une alimentation électrique pour le moteur électrique, et d'un rapport de démultiplication sélectionné pour une transmission couplée au moteur électrique ; et
sur détection de la baisse prédéterminée du courant moteur, commutation en parallèle du raccordement entre le premier segment d'enroulement (312A) et le deuxième segment d'enroulement (312B), seulement si la vitesse du véhicule x la tension de l'alimentation électrique x le rapport de démultiplication sélectionné a augmenté de plus d'un montant prédéterminé.

**11.** Procédé selon la revendication 9, si le moteur fonctionne avec un montage en parallèle du premier segment d'enroulement (312A) et du deuxième segment d'enroulement (312B) et sur détection d'une hausse prédéterminée du courant moteur, commutation en série du raccordement entre le premier segment d'enroulement (312A) et le deuxième segment d'enroulement (312B).

FIG. 1

FIG. 2

EP 2 625 779 B1

FIG. 3A

EP 2 625 779 B1

FIG. 3B

FIG. 4

FIG. 5

15

FIG. 6A

FIG. 6B

FIG. 7

FIG. 8A

FIG. 8B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060043916 A1